# EUROPEAN PATENT APPLICATION

(11) **EP 0 739 103 A2**
(43) Date of publication of application: **23.10.1996**
(21) Application number: 96105989.6
(22) Date of filing: 17.04.1996
(51) Int. Cl.: H04B 10/16

(54) **Bidirectional optical amplifier using an active fibre**

(30) Priority: 18.04.1995 IT TO950308
(71) Applicant: SIP SOCIETA ITALIANA PER l'ESERCIZIO DELLE TELECOMUNICAZIONI P.A., 10122 Torino (IT)
(72) Inventor: Pagano, Anna Chiara, Torino (IT); Riccardi, Emilio, Torino (IT); Sordo, Bruno, Dogliani, (Cuneo) (IT)
(74) Representative: Riederer Freiherr von Paar zu Schönau, Anton

(57) **Abstract**

The amplifier (3) uses, in the active element (4), the section of active optical fibre (5) travelled in both directions by signals to be amplified, transmitted on a line comprising separate carriers (1a, 2a, 1b, 2b) for the two transmission directions. The active element (4) is fitted between a pair of circulators (7, 8) such that, for both transmission directions, signals to be amplified in one of the two line sections (1a, 2b) pass through the active element (4) through one of the circulators and, after being amplified, exit through the other circulator thereby passing on the other section (2a, 2b).

## Description

The present invention relates to optical amplification systems and in particular its object is to provide a bi-directional active fibre optical amplifier for optical transmission lines with separate physical carriers for the two transmission directions.

In optical communication systems, there is a growing use of active fibre optical amplifiers, both as pre-amplifiers or post-amplifiers to allow signal transmission over long distances without regeneration, and as repeaters along the line. Such amplifiers, as is well known, comprise sections of rare earth-doped optical fibres into which the signal to be amplified and a pump signal of suitable wavelength, different from the one to be amplified, are injected. An active fibre amplifier is normally used in conjunction with isolators to reduce cavity effects due to reflections and the amplified spontaneous emission which propagates in the direction opposite to that of the signal. The amplifier therefore is a unidirectional structure, in spite of the fact that an active fibre can be used bi-directionally. The consequence is that on one hand it is necessary to have separate amplifiers for the two transmission directions, which increases system costs, and on the other hand it is not possible to use conventional time domain reflectometry devices to detect faults along the line.

Several proposals have been made to manufacture bi-directional active fibre amplifiers, and some of those proposals entail the use of the same fibre section to amplify counter-propagating signals. An example is described by S. Seikai et al. in the paper "Experimental Studies on Wavelength Division Bi-directional Optical Amplifiers Using an Er³⁺-Doped Fiber", Journal of Lightwave Technology, Vol. 12, No. 9, May 1994, pp. 849-853. The device described in the paper is designed for use in communication systems in which the signals transmitted in opposite directions have different wavelengths (1.533 m and 1.552 mm in the experiments reported). The use of the same section of active fibre for both directions is made possible by associating one or both ends of the active fibre with an optical circuit comprising a pair of isolators, one for each direction of transmission, arranged between two wavelength selective couplers which split and recombine the signals related to the two directions of transmission.

Devices like the one described above allow reduction of the number of components, and therefore of the costs and complexity of the communication systems they are installed in, compared with the use of separate unidirectional amplifiers or of bi-directional amplifiers comprising separate sections of active fibre for the two directions of transmission. However, they cannot be used when the signals transmitted in the two directions have the same wavelength, due to high crosstalk, as reported in the paper "Interaction between channels in a bi-directional amplified multicarrier system", presented by M. O. van Deventer at the poster session of ECOC '94, Florence, 25-29 September 1994, and published in pages 411 - 414 of the Conference Proceedings. As a consequence of the use of two wavelengths, a selection of transmitters and system components is necessary, which goes against the aforementioned need to reduce costs.

It should also be kept in mind that many applications make use of separate fibres for the two directions of transmission and that in these applications it is possible to use the same wavelength for both directions. The amplifier described in the paper by S. Sekai and others mentioned above, could also be employed for lines with two separate fibres for the two directions of transmission, by eliminating one of the two couplers and connecting the isolators directly to the two fibres: however, given the presence of wavelength selective couplers, this amplifier cannot be used if the counter-propagating signals have the same wavelength.

The purpose of the invention is to provide a bi-directional amplifier in which the active element comprises a single section of active optical fibre travelled in both directions by the signals to be amplified, transmitted over a line comprising separate physical carriers for the two directions of transmission, and which is arranged to operate even when the same wavelength is used for both directions of transmission.

According to the invention, the active element is placed between a first and a second three-port optical circulator, and each circulator presents:
- a unidirectional input port connected to the first physical carrier of a first line section and respectively to the second physical carrier of a second line section;
- a unidirectional output port connected to the second carrier of the first line section and respectively to the first carrier of the second line section, and
- a bi-directional input/output port which is connected to a respective end of the active element, is placed between the input and the output port, with reference to the direction of travel of the signals in the circulator, and, for both directions of transmission, causes the signal to be amplified present in one of the two line sections to pass into the active element through one of the circulators and, after being amplified, to exit through the other circulator thereby passing to the other section.

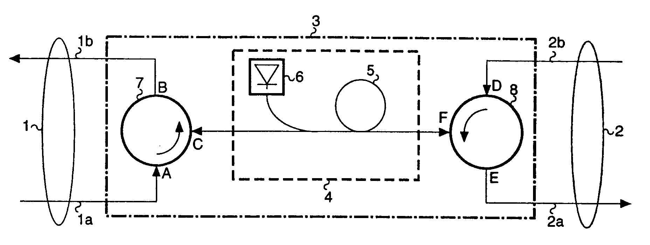

For further clarification, reference is made to the enclosed drawing, which is a schematic diagram of the device constituting the object of the invention.

The drawing depicts two sections 1, 2 of a bi-directional optical fibre transmission line comprising separate fibres 1a, 1b and respectively 2a, 2b for the two directions of transmission. By way of example, with reference to the drawing, fibres 1a, 2a are assumed to be used for left-to-right transmission and fibres 2b, 1b for transmission in the opposite direction. An active fibre optical amplifier, indicated as 3, able to operate bi-directionally, is placed between the two fibre sections.

In the embodiment illustrated, active element 4 of amplifier 3 comprises, in a wholly conventional manner, a section of active fibre 5 and a pump radiation source 6. To keep the drawing simple, the wavelength multiplexer to inject the pump radiation and the signal to be amplified into the fibre is not depicted. Pumping procedures are irrelevant for the invention.

To obtain bi-directional operation, active element 4 is placed between two 3-way optical circulators 7, 8, to which line sections 1, 2 are also connected. In particular, circulator 7 has an input port A connected to fibre 1a, an output port B connected to fibre 1b and an input/output port C connected to active element 4 and placed between ports A, B. Circulator 8, identical to circulator 7, has an input port D connected to fibre 2b, an output port E connected to fibre 2a and an input/output port F connected to active element 4.

Due to the structure of the circulators, signals present on fibre 1a pass from the latter to active element 4 through ports A, C of circulator 7, are amplified and exit the amplifier through ports F, E of circulator 8 passing on fibre 2a. Analogously, counter-propagating signals present on fibre 2b pass from the latter to active element 4 through ports D, F of circulator 8, are amplified and exit the amplifier through ports C, B of circulator 7 passing on fibre 1b. Active fibre 5 is thus used for amplification in both directions (from C to F or from F to C).

Optical circulators are commercial devices, well known to those skilled in the art, and it is not necessary to describe them in detail. Obviously, crosstalk performance between the channels propagating in the two directions depend on the degree of isolation between the input and the output port and between the two directions of input/output ports C, F. By way of example, use of circulators guaranteeing isolation on the order of about 50 dB for signals which may pass from fibre 1a to fibre 1b (or from fibre 2b to fibre 2a) or from active element 4 to the input fibre, results in a totally negligible crosstalk even when the signals propagating in the two directions have the same wavelength.

It is evident that what has been described is provided solely by way of non-limiting example and that variations and modifications are possible without departing from the scope of the invention.

## Claims

1. Bi-directional optical amplifier, with an active element (4) comprising a section (5) of active optical fibre travelled in both directions by signals to be amplified and coming from a bi-directional transmission line (1, 2), characterised in that, for amplification of signals transmitted on a line comprising a first and a second physical carrier (1a, 1b, 2a, 2b) for the two directions of transmission, the active element (4) is connected between a first and a second 3-port optical circulator (7, 8); and in that each circulator (7, 8) presents:
- a unidirectional input port (A, D) connected to the first carrier (1a) of a first line section (1) and respectively to the second carrier (2b) of a second line section (2);
- a unidirectional output port (B, E) connected to the second carrier (1b) of the first line section (1) line and respectively to the second carrier (2a) of the second line section (2), and
- a bi-directional input/output port (C, F) which is connected to a respective end of the active element (4), is placed between the input port (A, D) and the output port (B, E), with reference to the direction of propagation of the signals in the circulators (7, 8), and, for both directions of transmission, causes the signals to be amplified present in one of the two line sections to pass into the active element (4) through one of the circulators and, after being amplified, to exit through the other circulator thereby passing to the other section.
